# EUROPEAN PATENT APPLICATION

(11) **EP 4 350 596 A1**
(43) Date of publication of application: **10.04.2024**
(21) Application number: 23198290.1
(22) Date of filing: 19.09.2023
(51) Int. Cl.: G06Q 20/20, G06Q 20/24, G06Q 20/32, G06Q 20/40, G06Q 30/0601, G06Q 40/03

(54) **INTEGRATION OF FINANCING INTO A CUSTOMER SELFCHECKOUT INVOLVING SCANNING PRODUCTS WITH A USER DEVICE**

(30) Priority: 03.10.2022 US 202217958641
(71) Applicant: Affirm, Inc., San Francisco, CA 94108 (US)
(72) Inventor: Glover, Ellen, San Francisco (US); Karthikeyan, Ajai, San Francisco (US); Tang, Nelson, Toronto (CA)
(74) Representative: Piotrowicz, Pawel Jan Andrzej

(57) **Abstract**

A method for providing financing in connection with product scanning self-checkout may include receiving user information associated with a self-checkout product scanning application, providing a link to a financing option for a transaction to purchase one or more items in a virtual cart of the self-checkout product scanning application for provision to a customer associated with the user information received, responsive to selection of the link by the customer, performing a credit extension decision with respect to a financing option based on the user information and transaction information associated with the transaction, and, responsive to an approval from the credit extension decision, financing the transaction by providing payment for the transaction to a merchant associated with the self-checkout product scanning application.

## Description

### TECHNICAL FIELD

Example embodiments generally relate to financial industry technologies and, in particular, relate to apparatuses, systems, and methods for enabling a seamless integration of obtaining a loan into the process of using a smartphone to scan products for a customer self-checkout process in relation to purchasing goods or services.

### BACKGROUND

The financial industry is comprised of many thousands of customers, merchants, lenders, borrowers, and other role players that all interact in various ways to enable customers to ultimately have access to goods and services provided by the merchants. Credit and debit transactions have long been a way that individuals have managed point of sale transactions to ensure relatively seamless transfer of funds from customers, or on their behalf, to merchants for various smaller or routine transactions. Meanwhile, obtaining a loan from a traditional bank has long been the most common way of obtaining financing for non-routine or larger transactions. More recently, installment loans have become a popular option for financing even the smaller and more routine transactions.

In many of cases, a customer may interact with a merchant or lender to work through a transaction for obtaining financing that ultimately provides the merchant with the necessary funds to complete the transaction. When the transaction involves a lender, the lender will typically define a workflow for completing the transaction, which the customer will transit through. Recent advances have enabled this process to be conducted in real-time at checkout within a brick and mortar store. Meanwhile, a popular checkout process is also gaining traction in the form of self-checkout processes that enable the customer to scan products into a cart while walking through the store. The customer can then pay for the goods that were scanned without going through a conventional checkout process via which a store employee scans each product.

While these two independent processes are each gaining popularity, there is presently no seamless way to integrate the two. Example embodiments provide a technical solution for bridging that gap.

### BRIEF SUMMARY OF SOME EXAMPLES

In an example embodiment, a method for providing financing in connection with product scanning self-checkout may be provided. The method may include receiving user information associated with a self-checkout product scanning application, providing a link to a financing option for a transaction to purchase one or more items in a virtual cart of the self-checkout product scanning application for provision to a customer associated with the user information received, responsive to selection of the link by the customer, performing a credit extension decision with respect to a financing option based on the user information and transaction information associated with the transaction, and, responsive to an approval from the credit extension decision, financing the transaction by providing payment for the transaction to a merchant associated with the self-checkout product scanning application.

In another example embodiment, an apparatus for providing financing in connection with product scanning self-checkout may be provided. The apparatus may include processing circuitry configured for receiving user information associated with a self-checkout product scanning application, providing a link to a financing option for a transaction to purchase one or more items in a virtual cart of the self-checkout product scanning application for provision to a customer associated with the user information received, responsive to selection of the link by the customer, performing a credit extension decision with respect to a financing option based on the user information and transaction information associated with the transaction, and, responsive to an approval from the credit extension decision, financing the transaction by providing payment for the transaction to a merchant associated with the self-checkout product scanning application.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for extending credit for financial transactions involving self-checkout at checkout according to an example embodiment;
FIG. 2 illustrates a functional block diagram of a device configured to support obtaining financing during a self-checkout process according to an example embodiment;
FIG. 3 illustrates a control flow diagram associated with operation of a credit extension platform and a product scanning application in accordance with an example embodiment;
FIG. 4 is a block diagram showing combined workflow of two separate workflow managing servers integrated together in accordance with an example embodiment;
FIG. 5 illustrates a block diagram showing credit system interactions in accordance with an example embodiment;
FIG. 6 illustrates a login or signing screen of the self-checkout application in accordance with an example embodiment;
FIG. 7 illustrates an example scanning operation in accordance with an example embodiment;
FIG. 8 illustrates an interface screen of a virtual cart with an option to checkout in accordance with an example embodiment;
FIG. 9 illustrates the provision of a link to a second and different, but integrated, workflow for obtaining financing for the transaction associated with the virtual cart in accordance with an example embodiment;
FIG. 10 illustrates an interface screen for providing a cell number to identify the borrower and to acknowledge terms of the loan in accordance with an example embodiment;
FIG. 11 illustrates an interface for returning to an original workflow in accordance with an example embodiment;
FIG. 12 illustrates a block diagram of a method for providing financing in connection with product scanning self-checkout in accordance with an example embodiment; and
FIG. 13 is a block diagram of a method for providing financing for product scanning self-checkout according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

As noted above, the typical workflow for customer checkout, particularly when a financing option is employed, will necessarily follow or be part of the scanning process of products or items by an employee of the store. For example, the employee may scan all the items to generate a cart total for all items presented to the employee. This cart total may then be submitted by the customer as part of a loan application, or may be tied to a prior application, to obtain financing to cover the cart total. If approved, the merchant may receive funds for the cart total, and the customer may receive a loan based on the cart total. This process may, if slow to progress, or if denied, lead to a significant amount of transactional friction or even embarrassment for the customer.

Meanwhile, the separate process of self-scanning and self-checkout for products typically involves the customer scanning a code (e.g., a barcode) on each product while transiting through the store. The corresponding price of the product and identification of the product may be recorded and added to a virtual cart on an application, while the product itself is likely added to a physical cart of the customer. When the customer has finished shopping, the virtual cart may be summed to produce a virtual cart total that is paid for by the customer either with cash or a credit/debit card in an abbreviated checkout process that does not require rescanning of each product in the physical cart. The physical cart contents may be compared to the virtual cart to ensure accuracy, but otherwise, the transaction may be completed with far less time spent at the checkout register, or even without any time at the checkout register in some cases.

Example embodiments provide a technical solution for integrating these two processes. Thus, for example, a more seamless checkout experience may be provided in-store using the customer's own mobile communication device (e.g., mobile phone, tablet, etc.). The seamless nature of example embodiments may make for a much easier to implement checkout paradigm that may involve only the customer going to a single application on their own device for scanning of products into the virtual cart, and then, on the same device, obtaining financing to pay for the transaction. Moreover, the financing may be obtained prior to checkout and in a private context that does not create awkward interactions at a physical checkout counter.

Some example embodiments described herein provide for a credit extension platform with improved workflow for checkout that can be instantiated at an apparatus comprising configurable processing circuitry. The processing circuitry may be configured to execute various processing functions on financial data using the techniques described herein. The credit extension platform may, for example, be configured to provide a way to proceed to checkout after scanning items into a virtual cart, and obtain financing for the entire virtual cart or a portion thereof in a more coherent yet simple way that gives customers access to credit in a quick and seamless manner. This workflow may create greater confidence and comfortability with the selection and implementation of financing options, which may translate into more access to credit, more active customers, and better conversion rates for merchants.

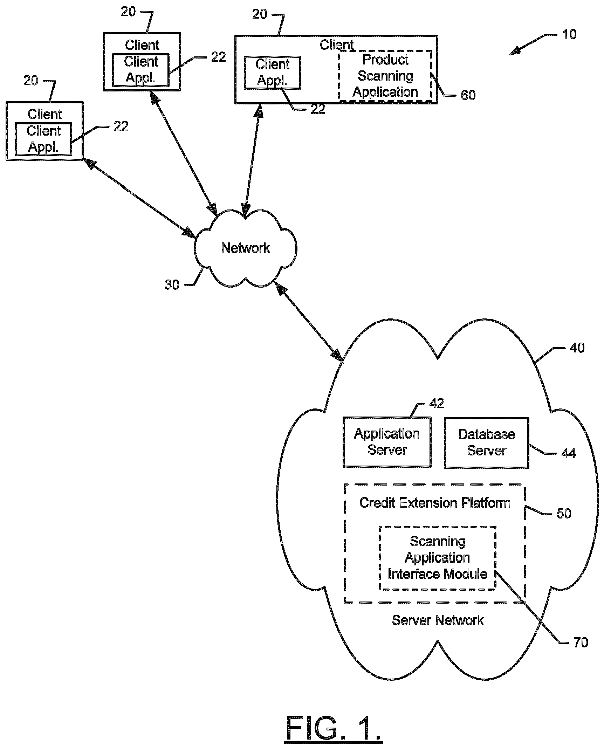

Example embodiments may be employed in connection with making underwriting decisions at checkout or time of purchase though at least some of the interface generation involved in example embodiments may also occur during the process leading up to checkout. An example embodiment of the invention will now be described in reference to FIG. 1, which illustrates an example system in which an embodiment of the present invention may be employed. As shown in FIG. 1, a credit management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a merchant company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities.

Each one of the clients 20 may include one or more instances of a communication device such as, for example, a computing device (e.g., a computer, a server, a network access terminal, a personal digital assistant (PDA), radio equipment, tablet, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions.

In an example embodiment, one function that may be provided by the application server 42 may be the provision of access to information and/or services related to credit extension platform 50, and more particularly relating to facilitating financial computations and calculations related to decisions associated with extensions of credit (e.g., loans where, for example, the loans may include a buy now, pay later loan, or other products associated with credit or lending transactions). For example, the application server 42 may be configured to provide (via the credit extension platform 50) execution of instructions, and storage of information descriptive of events or activities, associated with the credit extension platform 50 and the execution of a financial computations, calculations and modeling on behalf of a user of the system 10 located at one of the clients 20, or interacting with a user located at one of the clients 20, in real time. In some cases, the financial transaction may include obtaining buy now, pay later financing, and the activities associated therewith may include the provision of a loan/product application detailing information required by the lender (and operator of the credit extension platform 50) to determine whether credit, funds, or other products can be provided to the customer based on information provided in the loan/product application. However, example embodiments may also apply to other types of loans.

In some embodiments, the credit extension platform 50 may be a technical device, component or module affiliated with the lender or an agent of the lender. Thus, the credit extension platform 50 may operate under control of the lender or agent of the lender to be a technical means by which to carry out activities under direction of the lender/agent or employees thereof. As such, in some embodiments, the clients 20 may access the credit extension platform 50 services, and more particularly contact the credit extension platform 50 online and utilize the services provided thereby. However, it should be appreciated that in other embodiments, an application (e.g., the client application 22) enabling the clients 20 to interact with the credit extension platform 50 (or components thereof) may be provided from the application server 42 (e.g., via download over the network 30) to one or more of the clients 20 to enable recipient clients 20 to instantiate an instance of the client application 22 for local operation such that the credit extension platform 50 may be a distributor of software enabling individual users to utilize the credit extension platform 50. Alternatively, another distributor of the software may provide the client 20 with the client application 22, and the credit extension platform 50 may communicate with the client 20 (via the client application 22) after such download.

In an example embodiment, the client application 22 may therefore include application programming interfaces (APIs) and other web interfaces to enable the client 20 to conduct operations as described herein via the credit extension platform 50. The client application 22 may include a series of control consoles or web pages including a landing page, onboarding services, activity feed, account settings (e.g., user profile information), transaction management services, payment management services and the like in cooperation with a service application that may be executed at the credit extension platform 50. Thus, for example, the client application 22 may enable the user or operator to articulate and submit queries, make credit extension requests, initiate and pay for transactions using funds associated with a credit extension request, and/or the like using the credit extension platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the credit extension platform 50 configured to operate in accordance with an example embodiment of the present invention. In this regard, for example, the credit extension platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the credit extension platform 50. Thus, it should be appreciated that the functions of the credit extension platform 50 can be conducted via client-server based interactions involving communications between clients 20 and the server network 40, or may be conducted locally at one of the clients 20 after an instance of the credit extension platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the credit extension platform 50 residing at the application server 42 or at one of the clients 20). Thus, the credit extension platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the credit extension platform 50 may operate to enable the user associated with a given one of the clients 20 to setup an account (i.e., a user account) with an entity that operates the credit extension platform 50. After account setup, the user may initiate transactions with various merchants and fund the transactions via credit extended by the entity (via the credit extension platform 50). Notably, account setup may occur prior to the user attempting to initiate any particular transaction, or may occur while the user is in the process of conducting a particular transaction. Thus, for example, the user may already have the user account prior to conducting transactions, or the user may setup the user account while conducting a transaction.

In an example embodiment, the credit extension platform 50 may enable the user to request an extension of credit in connection with a transaction where the type of financing option for which the extension of credit is an installment loan or a conventional interest bearing loan for at least some items in a virtual cart that correspond to previously scanned items, by the user, responsive to the user proceeding to checkout (e.g., at a virtual checkout in an online application). In some cases, the credit extension platform 50 of some example embodiments may conduct different and separate determinations regarding credit extension for corresponding different types of financing options that can be offered by the lender. In such cases, for example, one or more offers of credit (each potentially having different terms) may be provided to the user at checkout for each of the different types of financing options that are offered. As an example, prior to checkout, the credit extension platform 50 may make a determination as to the creditworthiness for any type of loan option that may be offered to the user. One or more credit offers for which the user is qualified may then be provided at checkout. The credit offers may each have varying payment amounts, term lengths, interest rates/finance charges, etc.). The user (i.e., the customer) may then select the pertinent credit offer (e.g., with any selectable terms) that is desired for completion of the transaction and proceed to checkout for all or some of the items in the virtual cart.

In an example embodiment, the client 20 may be capable of running or executing other applications (e.g., in addition to the client application 22), and one such application may be a product scanning application 60. The product scanning application 60 may interface with a camera or other reading device (optical or otherwise) that enables the client 20 to scan or read content associated with individual products or items in the store and identify the corresponding products or items accordingly. For example, the product scanning application 60 may read a barcode, QR code, UPC code, RFID tag, or any of a number of other identifying indicia that are attached to each item, which may enable the product scanning application 60 to determine an identity of the item and a price for the item. When scanned by the product scanning application 60, the corresponding scanned item may be added to a virtual cart, which may store and/or present the identification information and price for the item (including quantity if more than one of the same item is scanned or to be purchased). The user may physically also place the corresponding scanned item into the user's physical cart and continue to move about the store obtaining products and scanning them into the virtual cart, while placing them in the physical cart.

In a typical case, the product scanning application 60 may require the user to sign in prior to scanning items (or at least prior to checking out). Thus, the items scanned may be associated with a user account that corresponds to the product scanning application 60, and which may store credit card information to enable quick payment at checkout via the credit card on file in association with the user account. When ready to checkout, the user may indicate as much, and the cart total may be presented for payment. The user may select to pay using the credit card on file, and may receive a receipt along with a QR code, exit pass or other indicia of completion of the transaction for presentation to store personnel at the store exit. The store personnel (or technology) may scan the QR code, exit pass or other indicia, and may be able to see a list of items in the virtual cart to confirm their correspondence to items in the physical cart. If such correspondence is confirmed, the user may leave the store without ever having to go through a physical checkout line and further product scanning and payment process. Thus, this process may generally be very popular. However, using the process normally requires a credit or debit card payment. Some users may prefer an alternative to traditional financial products, such as a product that allows the user to pay over time (via an installment loan, for example) for all or a portion of their transaction. However, the ability to seamlessly use or apply for installment loans or other pay over time methods to date have not been integrated into the checkout processes that are currently employed by instances of the product scanning application 60.

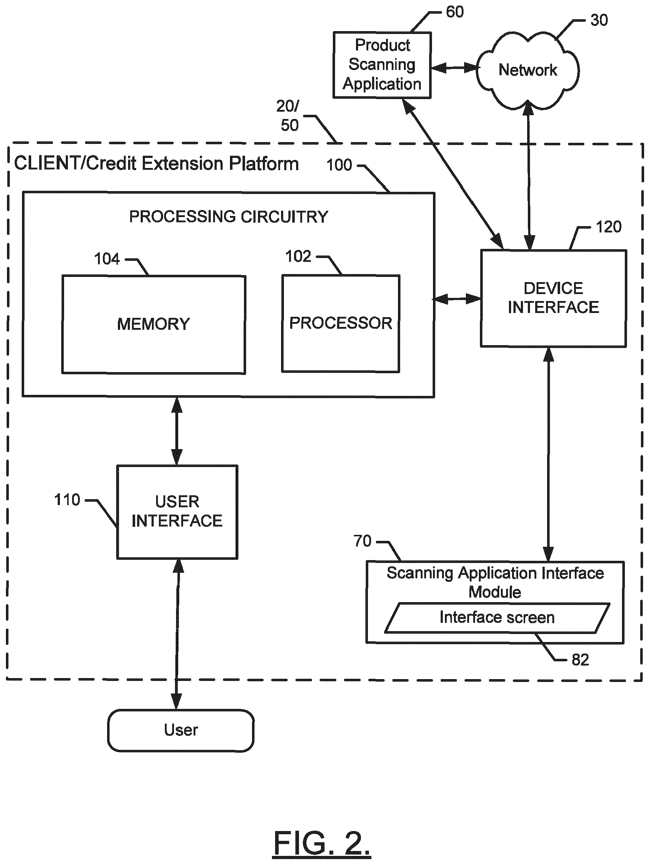

To address this deficiency, a technical bridge must be built. Example embodiments further provide a scanning application interface module 70, which may be employed by the credit extension platform 50 to allow the obtaining of credit (via the client application 22) as described above to be integrated into the process for self-checkout and product scanning described above. Some components of the system 10 that may support the operation of the scanning application interface module 70, and the corresponding technical bridge mentioned above will be described below in reference to FIG. 2.

In some example embodiments, the scanning application interface module 70 may be provided to generate the interface screens that guide the user through the process of interacting with the credit extension platform 50 to obtain a credit extension decision regarding a financing option as an integrated part of a further interaction ongoing with the product scanning application 60. In some cases, for example, the client application 22 may be used to engage (e.g., via a website and corresponding APIs) with both the credit extension platform 50 and the product scanning application 60 to select and scan individual products that the user has an interest in purchasing and then initiate payment for all or part of the virtual cart contents using financing associated with, for example, an installment loan. The credit extension platform 50 may thus be leveraged to perform an analysis to determine if all or some of the items are eligible for financing, whether credit can be granted to the user, and a loan originated to finance the transaction associated with paying for the virtual cart contents. The credit extension platform 50 may interact with the product scanning application 60 (via the scanning application interface module 70) in a way that is substantially seamless from the perspective of the client 20 (and the user). Thus, the product scanning application 60 may provide product details, pricing information, and, in some cases also information identifying the user (or a user account associated with the user) and/or other information associated with the financial transaction that is being evaluated for approval. In other words, the client 20 (e.g., via the scanning application interface module 70) may provide a user interface function for interacting with the credit extension platform 50 to identify the information that will be evaluated using the credit extension platform 50 to obtain credit as a seamless part of the self-checkout process. In this regard, a copy of the scanning application interface module 70 may be instantiated at the client 20, or the client 20 may utilize the services of the scanning application interface module 70 at the credit extension platform 50 via a client/server relationship.

Regardless of how the queries, calculations or modeling activities are initiated, the credit extension platform 50 of FIG. 1 may be used to manage execution of such activities as relate to obtaining credit directly or indirectly. Each of these activities may have its own respective timing and calculations and communications that are facilitated by the credit extension platform 50 and various components of the credit extension platform 50 may be conducted in parallel. The components, which may be functional modules that operate via API or function calls to respective segmented platforms or a monolith or other collection of rules, policies, instructions, or the like. Some of the structures associated with the scanning application interface module 70 of an example embodiment will be described in reference to FIG. 2.

FIG. 2 shows certain elements of an apparatus for provision of a seamless integration of self-checkout scanning and payment via credit obtained from an installment loan provider according to an example embodiment. The apparatus of FIG. 2 may be employed, for example, as the credit extension platform 50 itself operating at, for example, a network device, server, proxy, or the like (e.g., the application server 42 of FIG. 1) or as the client 20 (which is shown in FIG. 2). However, it should be appreciated that example embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the client 20 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating presentation of interface screens to support decision making regarding extensions of credit in connection with self-checkout in a simple and cogent manner is shown. In this regard, the credit extension platform 50 may be configured to perform analysis, modeling, or other determinations based on the signaling and/or the information provided to determine whether a financial transaction or loan can be underwritten for a given user. The apparatus may be an embodiment of the credit extension platform 50 or client 20 or a device or component thereof including, for example, the scanning application interface module 70. As such, configuration of the apparatus as described herein may transform the apparatus into a version of the credit extension platform 50 or client 20 having the corresponding functionalities described herein.

In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be remotely located relative to the user. In such cases, the user interface 110 may be located at one or all of the clients 20 of FIG. 1.

The device interface 120 may include one or more interface mechanisms for enabling communication with other components, devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application. For example, the memory 104 may store interface screen templates that define a basic structure for interface screens having corresponding functions or locations in a workflow. The interface screen templates may be populated with information specific to a given transaction or user.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the scanning application interface module 70, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the scanning application interface module 70 as described below.

The scanning application interface module 70 may be configured to include tools to facilitate execution of a series of interface screens 82 based on the current location within a workflow associated with obtaining financing for a transaction. The tools may be provided in the form of various modules (or submodules) that may be instantiated by configuration of the processing circuitry 100, and which may employ interface templates retrieved from the memory 104. The credit extension platform 50 may include tables, algorithms and/or the like that define decision making parameters regarding making credit offers and processing transactions based on the inputs provided thereto. The inputs may include credit limit information and/or other information identifying the user or customer (e.g., the applicant for credit), the goods involved, etc. In an example embodiment, the credit extension platform 50 may include a machine learning component programmed to take the inputs described above alone or with potentially other signals that may be used to balance risks associated with extending credit to a user in order to determine a form and structure of credit offers that are to be presented to the user. The credit offers may include any combination of financing option credit limits and/or credit offers. The credit extension platform 50 may utilize or otherwise communicate with the scanning application interface module 70 to enable the scanning application interface module 70 to provide the interface screens needed to navigate through the decision making process regarding extending credit offers, and the handling of acceptance of an offer, finally including also the completion of the transaction with the vendor.

The scanning application interface module 70 may also include APIs and information exchange tools for communication with the product scanning application 60 to enable the scanning application interface module 70 to obtain needed information from the product scanning application 60 to define the virtual cart (e.g., item name or description and corresponding price). The scanning application interface module 70 is also configured to take control of workflow that the client 20 sees from the product scanning application 60 to enable the user to checkout using financing from the credit extension platform 50 when the user selects such processing from the workflow generated otherwise by the product scanning application 60. The scanning application interface module 70 is also configured to return control of workflow that the client 20 sees to the product scanning application 60.

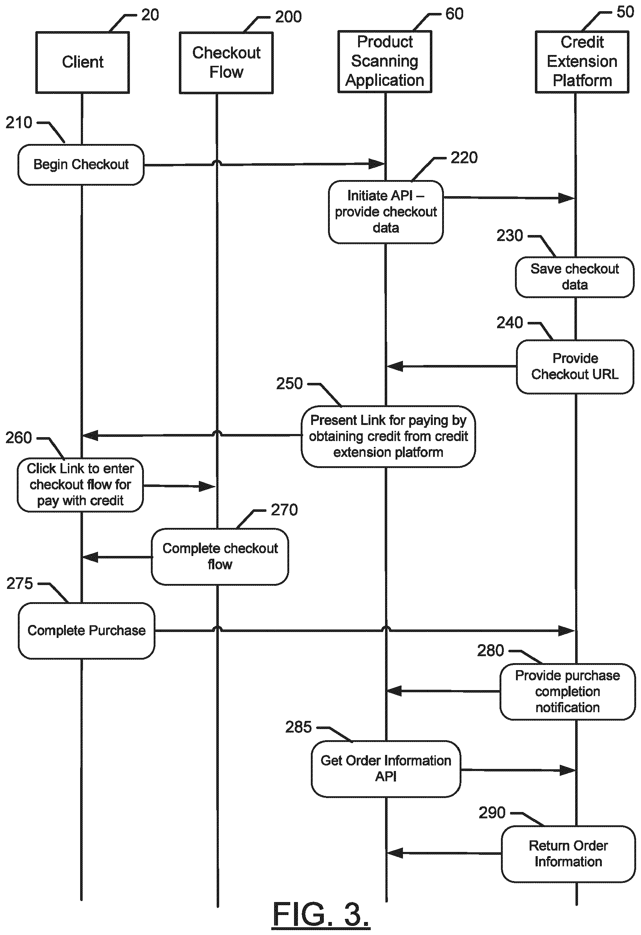

FIG. 3 illustrates a block diagram showing control flow associated with operation of the credit extension platform 50 and product scanning application 60 in accordance with an example embodiment. As shown in FIG. 3, the client 20 may be operated by the user (customer) to interact with the product scanning application 60 and the credit extension platform 50 to drive a cooperation that also includes checkout workflow 200 that is organized by the scanning application interface module 70. The processes shown in FIG. 3 may be understood to occur during or after the scanning of various products or items in a store by the user using the product scanning application 60 to create a virtual cart.

At operation 210, the user may interface with the client 20 to begin the checkout process. This may include pushing a button or making a selection of a soft key at the client 20 that signifies to the product scanning application 60 (via which the virtual cart may have been created) that the user is ready to checkout and pay for the items in the virtual cart. Thus, it can be appreciated that the client 20 is effectively experiencing a normal workflow generated by the product scanning applications 60 at this point in the process. The product scanning application 60 may then initiate an API (provided thereto by the scanning application interface module 70) to provide checkout data to the credit extension platform 50 at operation 220. The credit extension platform 50 may save the checkout data at operation 230, which may include product information and pricing information associated with the virtual cart. The credit extension platform 50 may then (via the scanning application interface module 70) provide a checkout URL to the product scanning application 60 at operation 240. The product scanning application 60, which is still running the workflow to this point, may then provide a link to be displayed at the client 20 to enable the user to obtain credit (via the credit extension platform 50) to pay for the items in the virtual cart at operation 250.

If the user never selects the link that was provided in operation 250, then flow continues outside the scope of this example. However, if the user clicks on or otherwise selects the link at operation 260, the user thereby elects to enter a separate workflow (managed by the scanning application interface module 70). This separate workflow, or checkout workflow, may be completed at operation 270. The checkout workflow may include one or more interface screens that are generated for soliciting provision of user information and/or transaction information that enable online checkout via paying for the virtual cart items via funds obtained on credit from the entity or lender associated with the credit extension platform 50. The user information may be information that identifies a user account, or information that can be used for setting up the user account. The transaction information may identify the merchant associated with the items, products or services that are the subject of the transaction (and form the virtual cart), the items, products or services themselves (e.g., SKU data), pricing information, and/or any other useful information associated with the merchant or the item/product/service that may be useful in connection with the operation of the credit extension platform 50 (e.g., machine learnable data that may inform how to tailor options or form and structure of messaging to the user). Thereafter, various underwriting rules and policies may be employed along with the corresponding model information for each respective type of financing option to determine whether the user is qualified to receive a credit offer. This may be accomplished by running a financing decision model to determine credit extension decisions for the user. In this regard, for example, the credit extension decision may include applying the user information and transaction information to a loan decision model to determine a loan credit decision (e.g., based on the underwriting policies and rules for corresponding loans).

The client 20 may initiate completion of the purchase at operation 275 by accepting all terms and conditions of the loan, and completing the transaction. The user is then effectively finished with the purchase, but further communication behind the scenes between the credit extension platform 50 and the product scanning application 60 may continue. In this regard, for example, the credit extension platform 50 may (e.g., via the scanning application interface module 70) provide a purchase completion notification to the product scanning application 60 at operation 280. The product scanning application 60 may then launch an API to get order information from the credit extension platform 50 at operation 285, and the order information to the product scanning application 60 at operation 290.

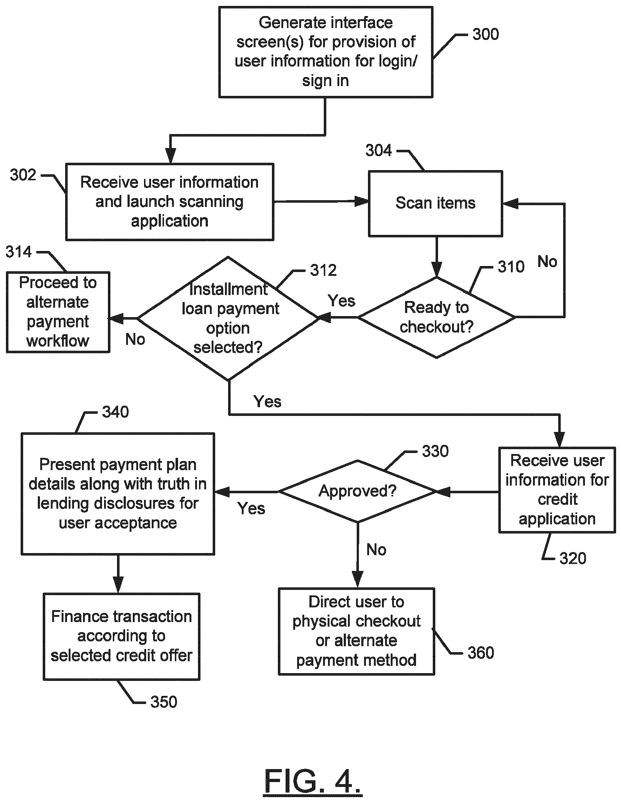

The method of FIG. 3 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. FIG. 4 illustrates a description of some of the processes described above in more general terms. In this regard, as shown in FIG. 4, interface screens for provision of user information for login or sign in may initially be provided (e.g., by the product scanning application 60) at operation 300. The information may be received, and a scanning application may be launched at operation 302. Items may then be scanned individually at operation 304. After each item is scanned, the user may either scan more items or proceed to checkout based on an indication the user may provide from the decision block 310.

If the user elects to proceed to checkout, a determination may be made at operation 312 as to whether the user has selected using an installment loan payment option. If the installment loan payment option is not selected, then flow may proceed to an alternate payment method and an entirely different payment workflow at operation 314. However, if the installment loan payment option is elected, then the user's information for a credit application may be received at operation 320 (e.g., either from the user, or from a merchant passing along information from or about the user), and a determination may be made as to whether the user is approved for the installment loan at operation 330. If approved, payment plan details and any required disclosures may be presented to the user at operation 340 for review and acceptance. After acceptance, the transaction may be financed according to the selected credit offer at operation 350. If the user was not approved at operation 330, the user may be directed to a physical checkout or other alternate payment method at operation 360.

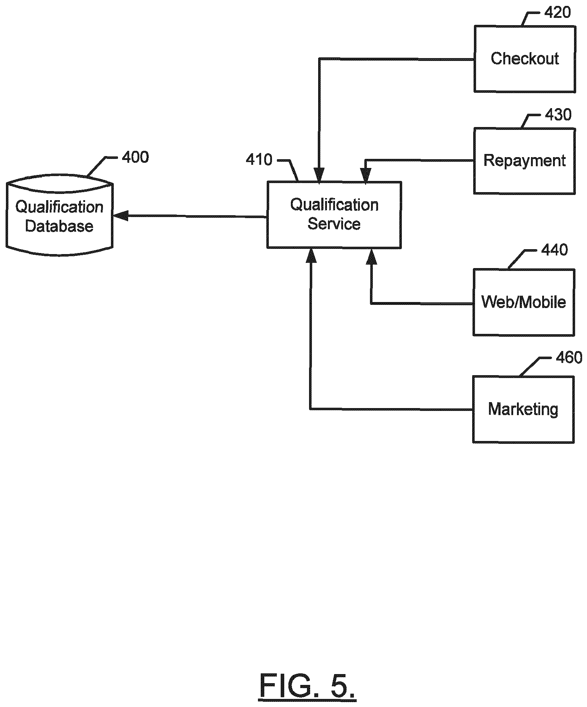

FIG. 5 is a block diagram of various systems interactions that may be employed to implement a self-checkout with a financing option in accordance with an example embodiment. As shown in FIG. 5, a qualification database 400 may store information associated with qualification (e.g., prequalification for existing user accounts, or qualification at checkout by setting up a user account during transaction processing) of a plurality of users, each having a corresponding user account setup and maintained as described above. In an example embodiment, the qualification database 400 may be a portion of the database server 44 of FIG. 1, or implemented in memory 104 of FIG. 2. The qualification database 400 may also store information associated with prior transactions for the users, merchants, products, etc., to enable machine learning to be conducted with respect to such information. A qualification service 410 may interface with and update the qualification database 400. The qualification service 410 may be implemented from the credit extension platform 50.

Checkout information may be provided to the qualification service 410 by various checkout systems 420 associated with respective different merchants or websites. The checkout systems 420 of this example may include either or both of the product scanning application 60 and the scanning application interface module 70. Repayment information may also be provided to the qualification service 410 by various repayment systems 430 associated with respective different merchants or websites. Web or mobile devices 440 may be examples of clients 20 that may interact with the qualification service 410 to setup user accounts and to initiate transactions (via the checkout systems 420) or make payments (via the repayment systems 430).

The qualification service 410 may be employed to make credit extension decisions described above. In some cases, the qualification service 410 may augment credit limits based on machine learning. In some cases, the machine learning may be performed with respect to marketing information from a marketing system 460. Thus, for example, promotions may be provided to selected users. Promotions, rebate offers, sale pricing and other marketing efforts associated with the credit extension platform may therefore be incorporated into the checkout processes for individual customers. Favorited items, or other behaviors exhibited by users that may show high interest in an item (or conversely activities that show low interest) may therefore be implemented on an adaptive basis to improve the quality of credit offers to potentially provide incentives to the user. Merchant incentives may also be provided. Machine learning may also (e.g., based on past knowledge of user behavior or tendencies) provide a structure and form for credit offers that are personalized to the user. For example, if it is known (or can be learned through repeated interactions) that the user favors low interest options, no interest options, short or long payment plans, or other specific traits of credit offers that the user qualifies to receive, the qualification service 410 may tailor a smaller list of options to the user where the favored options are prominently (or only) displayed. In other words, personalized terms may be provided to users for the credit offers they receive.

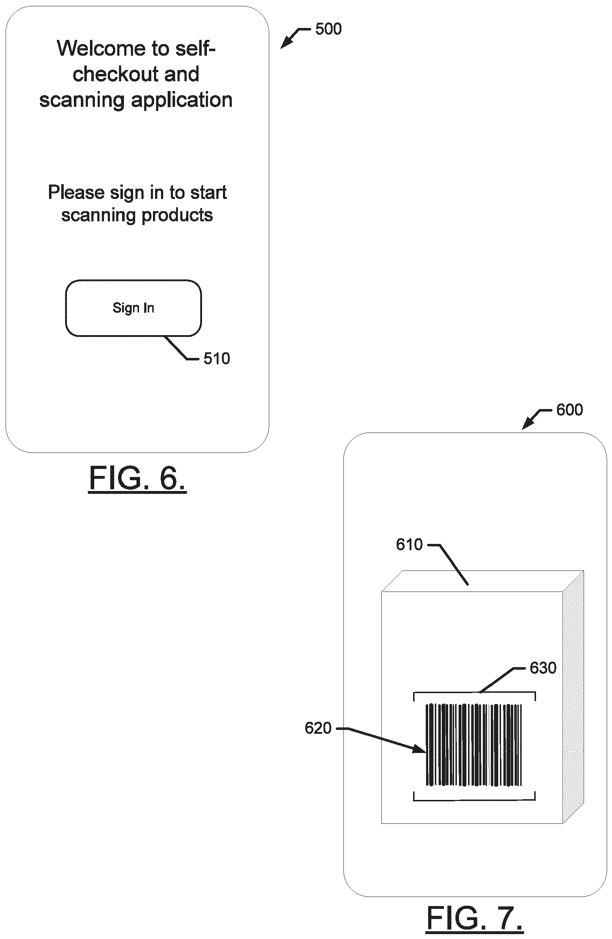

FIGS. 6-11 illustrate various examples of separate interface screens that may be used in some cases to provide the workflows described above (or portions thereof). In this regard, FIG. 6 displays a welcome or sign-in page 500. The user may click the sign in button 510 to launch a workflow (not shown) for gathering user information to sign into or create a user account for self-checkout using the product scanning application 60. After signing in, the user may be enabled to scan products to add to a virtual cart. When the user starts the scanning process, the user's camera (on the client 20) application may be incorporated to display camera view 600 of FIG. 7. The product 610 (or a portion thereof) may be brought into view of the camera in such a way as to expose a barcode 620 or other readable code or symbol. In some cases, the product scanning application 60 may generate a target zone 630 into which the user should place the barcode 620 to enhance readability thereof.

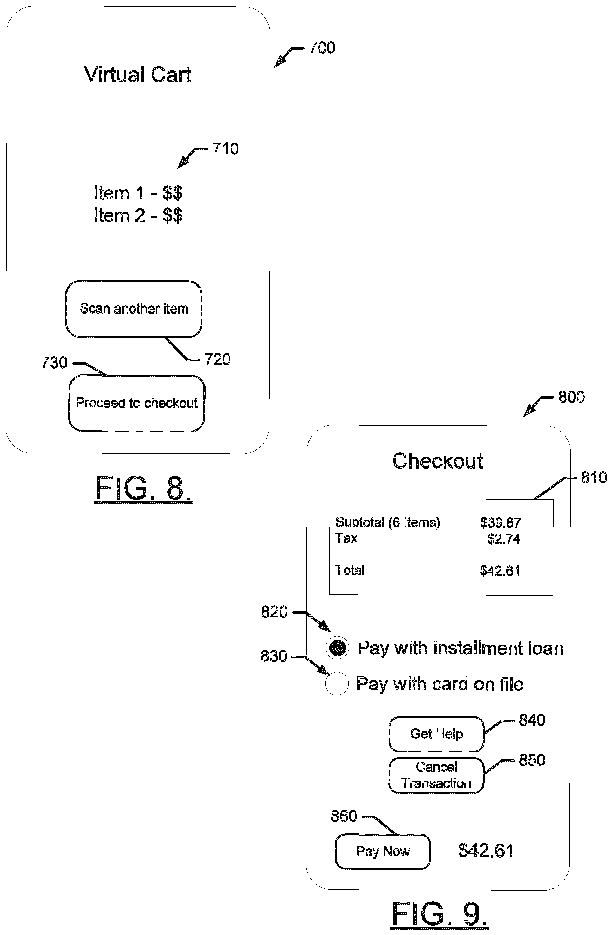

After the barcode 620 is read, the virtual cart 700 may be displayed to show information for the product just scanned and, in some cases, a list of products 710 in the virtual cart along with their respective prices as shown in FIG. 8. The user may be offered a continue shopping button 720 or other button that invites the user to scan another product. The user may also be offered the alternative of proceeding to checkout by selecting a checkout button 730. As discussed above, the workflow to this point may entirely be under the control of the product scanning application 60. However, behind the scenes, the scanning application interface module 70 may have already provided the uniform resource locator (URL) for presentation to the user to link to the installment loan workflow. Thus, in some cases, the link to the installment loan workflow may be or appear as a form of payment at checkout.

FIG. 9 shows a checkout page 800 where a cart total 810 is presented to the user for payment. Payment options may also be presented to the user. Via the scanning application interface module 70, one such option may be to pay with an installment loan 820. Other payment options, such as an option to pay with a credit card on file 830 may also be presented. In some cases, the checkout page 800 may also include a help button 840 and a cancel button 850. Once the user has selected the desired payment method, a pay now button 860 may initiate payment using the selected method.

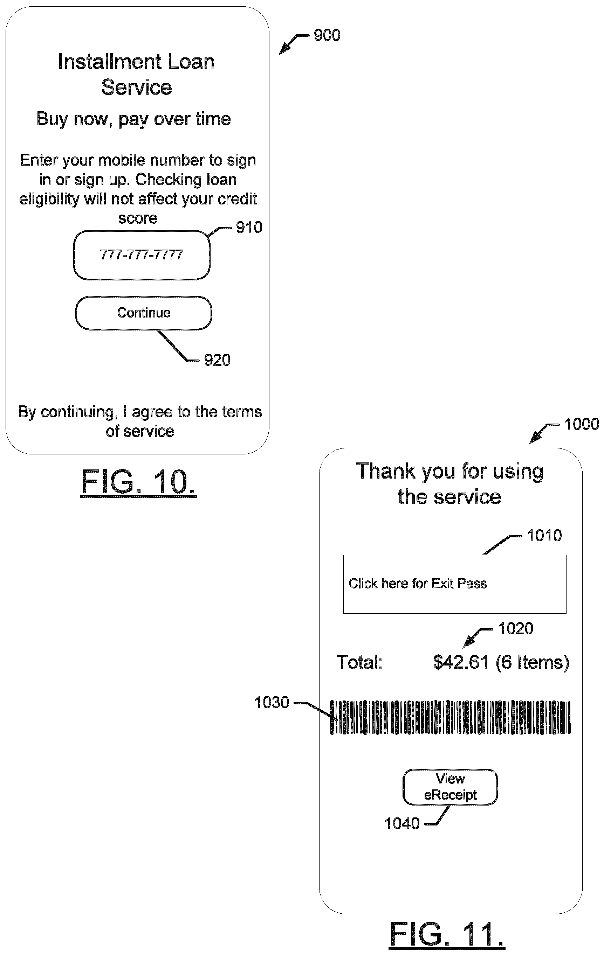

If the user selected the option to pay with an installment loan 820 in FIG. 9, the workflow control may shift to the scanning application interface module 70. An installment loan workflow may then takeover. FIG. 10 illustrates an example installment loan application page 900 in which the user can be approved for the loan simply by entering the user's mobile number 910, or other identification information requested. After the identifying information has been provided, the user may select to continue 920 to agree to service terms presented, and initiate obtaining a loan to secure funding for the transaction. As shown in FIG. 11, when the funding is provided, the transaction may seamlessly be completed, and workflow may return to the product scanning application 60 to provide an exit screen 1000, which may provide an exit pass 1010 for the user, and/or an indication of the transaction total 1020, along with a code 1030 for scanning by personnel of the store to confirm that the virtual cart contents and the physical cart contents correspond. The user may then simply exit the store without ever having to go through a physical checkout, and with the transaction having been completed using self-scanning and checkout services along with procurement of an installment loan of accepted terms. The seamless nature of the process, and the avoidance of the interest associated with credit card purchasing may be attractive to customers, and may also drive volume sales for the merchant.

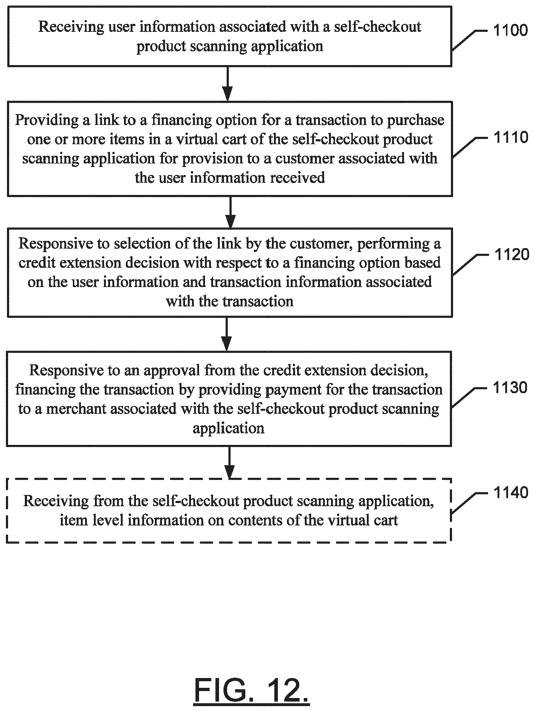

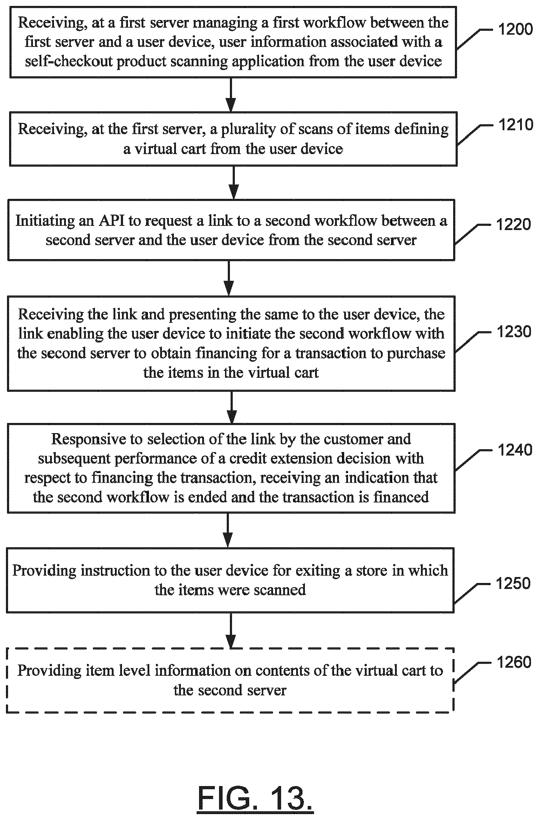

From a technical perspective, the credit extension platform 50 and/or client 20 described above may be used to support some or all of the operations described above. As such, the apparatuses described in FIGS. 1 and 2 may be used to facilitate the implementation of several computer program and/or network communication based interactions. As an example, FIGS. 12 and 13 are examples of a flowchart of a method and program product according to an example embodiment of the invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowcharts block(s). These computer program instructions may also be stored in a computer-readable memory that may direct a computer or other programmable apparatus to function in a particular manner, such that the instructions stored in the computer-readable memory produce an article of manufacture which implements the functions specified in the flowcharts block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowcharts block(s).

Accordingly, blocks of the flowcharts support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for providing financing in connection with product scanning self-checkout is shown in FIG. 12. The method may include receiving user information associated with a self-checkout product scanning application at operation 1100 and providing a link to a financing option for a transaction to purchase one or more items in a virtual cart of the self-checkout product scanning application for provision to a customer associated with the user information received at operation 1110. The method may also include, responsive to selection of the link by the customer, performing a credit extension decision with respect to a financing option based on the user information and transaction information associated with the transaction at operation 1120, and, responsive to an approval from the credit extension decision, financing the transaction by providing payment for the transaction to a merchant associated with the self-checkout product scanning application at operation 1130.

In an example embodiment, an apparatus for performing the method of FIG. 12 above may comprise a processor (e.g., the processor 102) or processing circuitry configured to perform some or each of the operations (1100-1130) described above. The processor may, for example, be configured to perform the operations (1100-1130) by performing hardware implemented logical functions, executing stored instructions, or executing algorithms for performing each of the operations. In some embodiments, the processor or processing circuitry may be further configured for additional operations or optional modifications to operations 1100 to 1130.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may include an additional operation 1140 (which is demonstrated as being optional by being dashed in FIG. 12), which may include receiving from the self-checkout product scanning application, item level information on contents of the virtual cart. In an example embodiment, the credit extension decision may be further performed responsive to receipt of account identification information associated with the customer. In an example embodiment, the account identification information may include a phone number of the customer. In some cases, the self-checkout product scanning application may manage a first workflow with the customer, and the customer may initiate a second workflow responsive to the customer selecting the link. The second workflow may ends after providing the payment for the transaction to the merchant at which time the first workflow manages provision of an exit pass or code to a smartphone of the customer. In an example embodiment, the first workflow is operated by a first server and the second workflow is operated by a second server that is different than the first server. In some cases, the first workflow provides a first interface screen for customer sign in and a second interface screen for item scanning, and the second workflow provides a third interface screen for providing account identification information associated with a new or existing account of the customer, and a fourth interface screen for accepting terms to obtain the financing of the transaction. In an example embodiment, the second workflow ends and returns control to the first workflow responsive to providing a communication to the self-checkout product scanning application to confirm completion of the financing of the transaction. In some cases, the financing option may be an installment loan.

FIG. 13 illustrates another perspective of the method from that of the first server. In this regard, FIG. 13 illustrates a method for providing financing for product scanning self-checkout. The method may include receiving, at a first server managing a first workflow between the first server and a user device, user information associated with a self-checkout product scanning application from the user device at operation 1200. The method may further include receiving, at the first server, a plurality of scans of items defining a virtual cart from the user device at operation 1210 and initiating an application programming interface (API) to request a link to a second workflow between a second server and the user device from the second server at operation 1220. The method may also include receiving the link and presenting the same to the user device at operation 1230. The link may enable the user device to initiate the second workflow with the second server to obtain financing for a transaction to purchase the items in the virtual cart. The method may also include, responsive to selection of the link by the customer and subsequent performance of a credit extension decision with respect to financing the transaction, receiving an indication that the second workflow is ended and the transaction is financed at operation 1240 and providing instruction to the user device for exiting a store in which the items were scanned at operation 1250. Like the method above, this method may also include optional modifications or operations. For example, the method may further include providing item level information on contents of the virtual cart to the second server at operation 1260. In an example embodiment, the instruction provided may further include providing an exit pass or code to the user device.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for providing financing in connection with product scanning self-checkout, the method comprising:
receiving user information associated with a self-checkout product scanning application;
providing a link to a financing option for a transaction to purchase one or more items in a virtual cart of the self-checkout product scanning application for provision to a customer associated with the user information received;
responsive to selection of the link by the customer, performing a credit extension decision with respect to a financing option based on the user information and transaction information associated with the transaction; and
responsive to an approval from the credit extension decision, financing the transaction by providing payment for the transaction to a merchant associated with the self-checkout product scanning application.

2. The method of claim 1, wherein the credit extension decision is further performed responsive to receipt of account identification information associated with the customer.

3. The method of claim 2, wherein the account identification information comprises a phone number of the customer.

4. The method of claim 1, wherein the self-checkout product scanning application manages a first workflow with the customer,
wherein the customer initiates a second workflow responsive to the customer selecting the link, and
wherein the second workflow ends after providing the payment for the transaction to the merchant at which time the first workflow manages provision of an exit pass or code to a smartphone of the customer.

5. The method of claim 4, wherein the first workflow is operated by a first server and the second workflow is operated by a second server that is different than the first server.

6. The method of claim 4, wherein the first workflow provides a first interface screen for customer sign in and a second interface screen for item scanning, and
wherein the second workflow provides a third interface screen for providing account identification information associated with a new or existing account of the customer, and a fourth interface screen for accepting terms to obtain the financing of the transaction.

7. The method of claim 6, wherein the second workflow ends and returns control to the first workflow responsive to providing a communication to the self-checkout product scanning application to confirm completion of the financing of the transaction.

8. The method of claim 1, wherein the financing option is an installment loan.

9. The method of claim 1, further comprising, receiving from the self-checkout product scanning application, item level information on contents of the virtual cart.

10. An apparatus for providing financing in connection with product scanning self-checkout, the apparatus comprising processing circuitry configured to perform the method of any of claims 1-9.
